# EUROPEAN PATENT APPLICATION

(11) **EP 3 920 083 A1**
(43) Date of publication of application: **08.12.2021**
(21) Application number: 20178615.9
(22) Date of filing: 05.06.2020
(51) Int. Cl.: G06K 9/00, G06K 9/62, G06F 3/01

(54) **POINTING TO NON-MAPPED OBJECTS OUTSIDE A VEHICLE**

(71) Applicant: Aptiv Technologies Limited, St. Michael (BB)
(72) Inventor: BARTH, Alexander, 42929 Wermelskirchen (DE); BÜHREN, Markus, 40699 Erkrath (DE)
(74) Representative: Manitz Finsterwald Patent- und Rechtsanwaltspartnerschaft mbB

(57) **Abstract**

A computer implemented method for determining a command of an occupant of a vehicle comprises the following steps carried out by computer hardware components: determining object information indicating information about at least one object outside the vehicle; determining occupant gesture information indicating information related to the occupant; and selecting a task to be carried out based on the object information and the occupant gesture information.

## Description

### FIELD

The present disclosure relates to methods and system for determining a command of an occupant of a vehicle.

### BACKGROUND

Gesture control in vehicles may be used for in-vehicle controls of infotainment systems. However, gesture control is presently not possible for control related to objects outside the vehicle.

Accordingly, there is a need to provide gesture control related to objects outside a vehicle, allowing making an intuitive and convenient link between objects outside the vehicle and a command that a user wants to trigger with respect to these objects.

### SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for determining a command of an occupant (for example of a driver or a passenger) of a vehicle, the method comprising the following steps performed (in other words: carried out) by computer hardware components: determining object information indicating information about at least one object outside the vehicle; determining occupant gesture information indicating information related to the occupant; and selecting a task to be carried out based on the object information and the occupant gesture information.

In other words, a task to be performed may be determined based on measurement data of internal and external sensors, wherein the external sensors provide information about an object, and the internal sensor provide information about a gesture of a user (or an occupant of the vehicle), wherein the task is related to the object, and the object is chosen from a plurality of objects based on the gesture of the user. The object may be detected without the use of a map. The object may be a moving (or dynamic) object.

Some tasks and actions in connection with the detected objects may be triggered. As such, gesture control may not be limited to interacting with objects inside the car, such as infotainment system or other control elements, but actions related to outside objects may be triggered using gesture control or multi-modal input methods including other systems like voice input.

The occupant gesture information may also be referred to as pointing input.

The object information may be determined independent from a map of objects, or the object may not be included in a map of objects in a vicinity of the vehicle. The gesture may be a gesture of pointing to a non-mapped object outside the vehicle.

Fusion of exterior and interior sensing may be provided, and may allow for determination of an in-cabin person (in other words: occupant; for example driver or passenger) pointing to non-mapped objects outside of the cabin (or vehicle).

According to another aspect, the object information is determined based on at least one external sensor (which may also be referred to as exterior sensor).

According to another aspect, the external sensor comprises at least one of a radar sensor, a camera, a lidar sensor, or an ultrasonic sensor or the like. It will be understood that the external sensor may be provided inside the vehicle, but acquires sensor data related to the exterior of the vehicle.

According to another aspect, the object information is determined based on information that is communicated from another vehicle (for example via V2V (vehicle-to-vehicle) communication), for example using WLAN (wireless local area network), and the object information may originally be detected by sensors of the other vehicle.

According to another aspect, the occupant gesture information is determined based on at least one internal sensor. According to another aspect, the internal sensor comprises at least one of a vision system, an infrared (IR) vision system, a near infrared (NIR) vision system, a red-green-blue (RGB) vision system, a red-green-blue infrared (RGB IR) vision system, a time of flight camera, a CCCR vision system (Bayer pattern with three clear pixels and a red pixel) or any other Bayer pattern, or any other kind of vision sensors or even other sensors than vision sensors (for example a radar sensor).

According to another aspect, the occupant gesture information comprises at least one of a pointing direction of a finger of the occupant, information indicating whether the occupant hand follows a pre-determined trajectory, or a viewing direction of the occupant.

According to various embodiments, the occupant gesture information may include a selection vector, like will be described in more detail below.

According to another aspect, the computer implemented method further comprises the following step carried out by the computer hardware components: acquiring a voice command from the occupant. The task to be carried out is selected further based on the voice command.

It has been found that using the object information and the occupant gesture information for determining an object and using the voice command for determining a task related to the object leads to a good user experience.

According to another aspect, instead of a voice command, a gesture following the pointing or by pressing a button may be used as a command. According to another aspect, preceding or following the pointing gesture, another gesture may be used as a command. Alternatively, the action may be selected via the infotainment system using other control inputs such as buttons, knobs, touch screen, eye gaze selection, receiving an event or input request from the navigation or ADAS (advanced driver-assistance systems) system. Any combination of the above may be used as a command. It will be understood that the above merely are examples, and that other systems in the car may trigger an event or input request to which the user would respond with pointing to an outside object.

According to another aspect, the computer implemented method further comprises the following step carried out by the computer hardware components: determining a plurality of candidate objects for which a task is to be carried out based on the objection information and the occupant gesture information.

If more than one candidate object is determined, it may be possible to determine which of the candidate objects is meant by taking into account the voice command. For example, a voice command may not make sense for most of the candidate objects, but may only make sense for one candidate object; then this one candidate object may be chosen to be the object for which the task is carried out.

According to another aspect, the plurality of candidate objects may be determined based on respective locations of the at least one object and a direction determined based on the occupant gesture information.

The task to be carried out may then be selected based on the plurality of candidate objects and the voice command.

According to another aspect, the computer implemented method further comprises the following step carried out by the computer hardware components: determining a context of the voice command. The task to be carried out is selected based on the plurality of candidate objects and the context.

According to another aspect, the task comprises at least one of a classification task, an identification task, or a validation task.

According to another aspect, the computer implemented method further comprises the following steps carried out by the computer hardware components: carrying out the task to obtain a processing result; and carrying out an action based on the processing result.

The action may be at least one of an object appearance-centric action, a system vehicle behavior adaption-centric action, or a navigation-centric action.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a system according to various embodiments;
- Fig. 2: an illustration of a pointing scenario according to various embodiments;
- Fig. 3: shows a flow diagram illustrating a method for determining a command of an occupant of a vehicle according to various embodiments; and
- Fig. 4: a computer system with a plurality of computer hardware components configured to carry out steps of a computer implemented method for determining a command of an occupant of a vehicle according to various embodiments.

### DETAILED DESCRIPTION

Gesture control may be available for in-vehicle controls of infotainment systems. Various examples allow the user to point at certain elements inside or outside the car. One specific application is to point at static points of interest (POI) stored in a map. A localization method is required to map the POI from a global world coordinate system into the local vehicle coordinate system or vice versa to be able to intersect the pointing direction with a 3D (three-dimensional) box representing the POI. The system can be combined with voice control, for example, asking "what is this?" while pointing at a building, site etc. or "what is the specialty of this restaurant?" while pointing at a given restaurant.

According to various embodiments, gesture control for static and dynamic POI which are not part of a map but can be perceived by a vehicle using its exterior sensors such as cameras, radars, or lidars is provided. Such POI include, for example, vehicles, motorbikes, pedestrians, road signs, construction zones, or empty parking spaces.

Various embodiments may be implemented using wide angle time of flight technology and gesture recognition methods. Various embodiments may be implemented using gesture technology from other sensors, e.g. a 2D (two-dimensional) cabin camera (RGB, RGB-IR, IR), structured light camera, or stereo camera, thermal camera, in-cabin radar, or ultrasonic sensor.

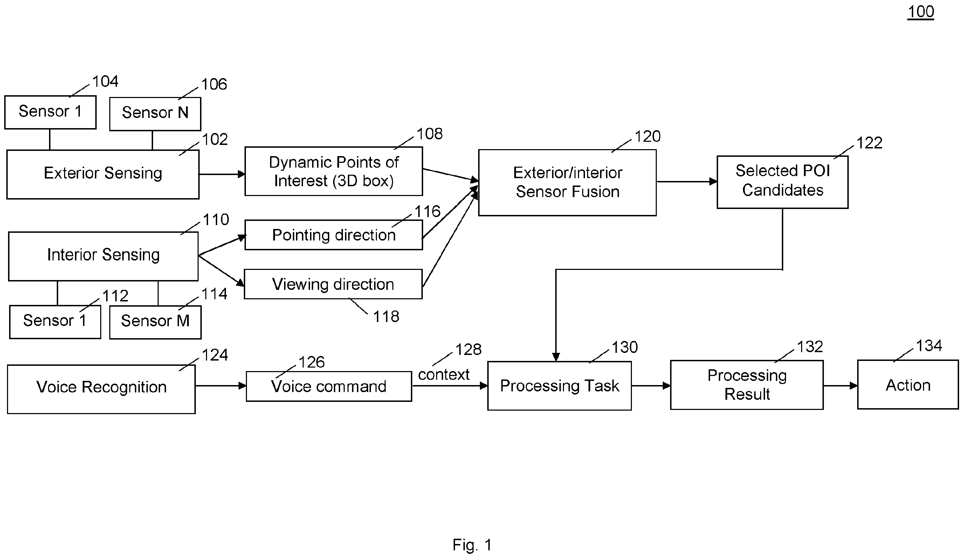

Fig. 1 shows an illustration of a system 100 according to various embodiments. The system 100 includes various sensors as input device, a computing device for processing the input data, and an output device (including an action module 134).

The processing modules include an exterior sensing module 102 for environment perception (for example for determining dynamic points of interest 108, for example in the form of one or more 3D (three-dimensional) boxes), an interior sensing module 110 for example for estimation of eye gaze direction (for example viewing direction 116) and/or finger pointing direction 116, a sensor fusion module 120 for combining the data from exterior and interior sensing, a voice recognition module 124 to recognize voice commands 126 (which may include a context 128 of the voice command 126), a processing module (processing task module 130) that performs a specific task based on the given voice command 126 and the output 122 of the exterior/interior fusion module 122 (which may include selected POI candidates 122), and an action 134 resulting from the processing task result 132. The context may be information which is used to resolve indefinite cases, where more than one object may be a candidate object. For example, the context may for example be that if the driver says "follow this blue car", the color of the car pointed to could be used to resolve cases where the pointing direction is close to two or more objects (but only one of the objects is in line with the context, for example only one car of several candidate cars is a blue car). The color may be extracted from the speech command.

The exterior sensing module 102 includes at least one sensor (illustrated a sensor 1 (104) and sensor N (106), wherein N is an integer number and indicates the total number of sensors) such as radar, camera, lidar, ultrasonic, etc. that is able to perceive the environment of the car. According to various embodiments, the exterior sensing module 102 may detect and track objects and map these objects to a local car coordinate system.

An object may be represented, for example, by a 3D bounding box or other descriptors representing its position and orientation in space as well as at least one dimension attribute. In addition, the exterior sensing module 102 may classify the type of object, for example vehicle, motorbike, bicycle, pedestrian, traffic sign, or construction site.

According to various embodiments, the exterior sensing module 102 may detect drivable freespace, lanes, lane markings, traffic signs, or empty parking spaces or the like.

The interior sensing module 110 may determine information derived from the occupants (driver or cabin passengers) that can be used for predicting the intent of selecting an object inside or outside the vehicle.

The derived information may be a selection vector, wherein the selection vector may be defined by an anchor point (which may be a three-dimensional (3D) entity) and a pointing direction (which may be another 3D entity). Both the selection vector and the object may be considered to be in the same coordinate system; alternatively, if the selection vector and the object are given in different coordinate systems, a transformation between the coordinate system of the object and the coordinate system of the selection vector may be determined, for example using a calibration step.

According to various embodiments, the interior sensing module 110 may provide the selection vector directly, for example using a time of flight, structured light or a stereo camera. According to another embodiment, if the interior sensing module 110 does not provide 3D information directly, the 3D position may be approximated, for example by using certain assumptions, e.g. known size of an eye or hand to get the right scale, in combination with the intrinsic parameters of the imaging system (e.g. focal length, optical center, distortion parameters).

According to various embodiments, 3D coordinates may be derived from 2D images, for example using deep learning based approaches, wherein training on 2D images may be provided with 3D ground truth data. In that case, the neural network may learn the most probable mapping of 2D to 3D.

Implementations of such direction vector may include the viewing direction of at least one person in the vehicle, e.g. the driver, and/or at least one pointing direction of the driver or other passengers in the cabin using hand and arm gestures. The anchor point may be relative to the eyes, the head center, or other characteristic points of a human head.

According to various embodiments, the vector may be an extension of the index finger.

According to various embodiments, the vector may be a 'hand vector', i.e. a vector along the longitudinal axis of the hand, e.g. connecting the hand center and the tip of the hand. The anchor point of the hand vector may be any point on the hand, for example e.g. a fingertip or the hand center.

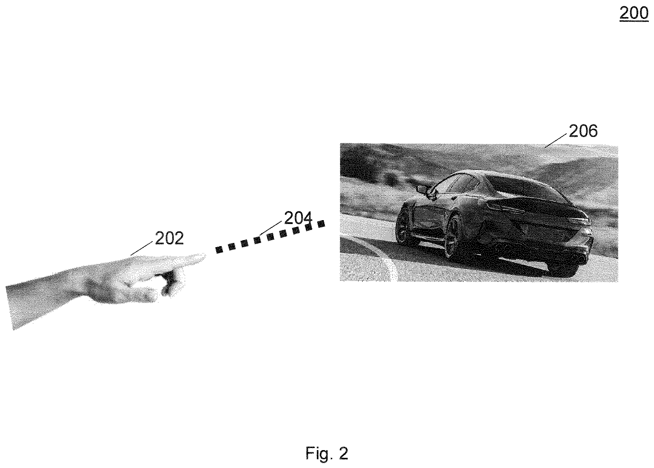

Fig. 2 shows an illustration 200 of a pointing scenario according to various embodiments. An occupant's hand 202 may point at a car 206, and the vector 204 pointing at the car 206 may be determined as an extension of the index finger or as a hand vector, like described above.

Furthermore, information about the temporal behavior of body parts (e.g. movement of hands) or the hand pose may be determined and provided by the interior sensing module 110.

According to various embodiments, the movement of body parts may further be mapped to a linear moving direction, e.g. by fitting a line through a series of hand positions in a 3D coordinate system or as a 2D projection in the image plane. Alternatively, instead of a (straight) line, higher order polynomials, splines, or other mathematical functions may be used.

A moving direction may be estimated by tracking of body parts using a motion model, e.g. with a Kalman filter or similar techniques.

The anchor point for the temporal behavior feature may, for example, be on the hand at the end or beginning of the movement or at a position calculated using the positions from several time steps, e.g. by calculating the average position (for example of a pre-determined point of the hand).

The motion direction may not be restricted to be related to a motion of the hand. The motion direction may (alternatively or additionally) be related to a rotation of the head, an eye movement, and/ or movement of the upper body (e.g. turn around).

The interior sensing module 110 may include one or more sensors (illustrated as sensor 1 (112) and sensor M (114), wherein M is an integer number and indicates the total number of sensors. The one or more sensors may include or may be one or more vision systems, e.g. NIR, RGB, RGB-IR, or Time of Flight cameras placed inside the cabin, for example in front of the driver, in the A-pillar, in the roof module, around or inside the rear view mirror, or in the dashboard. Additional sensors may be in-cabin radar or ultrasonic sensors.

The exterior/ interior fusion module 120 may combine information about objects from the exterior sensing module 102 with the pointing direction from the interior sensing module 110.

The exterior/ interior fusion module 120 may provide a list of candidate objects which are likely being selected by a user either by pointing, viewing or combination of both. For each object, the module provides a likelihood or confidence measure of being selected.

According to various embodiments, the selection vector (defined by the anchor point and the pointing direction) may be intersected geometrically with the 3D bounding box of a candidate object.

The likelihood may be a function of the distance of the intersection point to the object center/object border, i.e. if the vector intersects at a point close to a corner of the box, it is less likely than in the middle of the box.

If more than one object is intersected by the selection direction, parameters such as distance to the ego vehicle or object height may be incorporated.

According to various embodiments, the uncertainties of the selection vector and the object location may be incorporated. Instead of using a line, a cone may be used to represent the selection direction, wherein the cone may originate at the anchor point body part (e.g. a hand or eye) and may have a radius which increases with distance to the object.

According to various embodiments, a temporal synchronization of the interior sensing module 110 and the exterior sensing module 102 may be provided. If the interior sensing module 110 and the exterior sensing module 102 are not synchronized directly, e.g. using a common data trigger line, the processed data may be provided with a timestamp in a common reference time base (for example a common clock).

According to various embodiments, either the selection vector or the pose of the candidate object may be extrapolated to a different timestamp, for example, by tracking of the object using a Kalman filter, particle filter, or other tracking or temporal extrapolation approaches. This may be of particular relevance if relative motion between the selection vector and the object is high compared to the temporal distance, e.g. for cross traffic or oncoming traffic, or fast speed of the host vehicle with respect to static objects in the scene.

According to various embodiments, the scene may be represented as a grid structure, e.g. 2D occupancy grid or 3D voxel structure. Grid cells occupied by an object may be accumulated proportional to the overlap with the object bounding box and the cone of the selecting direction. Peaks in the occupancy grid may indicate potentially selected objects. The motion of ego vehicle (in other words: host vehicle) may be taken into account when inserting the data into the grid structure, e.g. by translation and rotation according to the six degrees of freedom motion of the host vehicle (delta x, delta y, delta z, delta pitch, delta yaw, delta roll).

According to various embodiments, a data driven approach (for example using a neural network, or another training based methods such as, for example, decision trees, SVM (support vector machine), Bayesian classifiers) may be used.

According to various embodiments, a neural network may be trained to predict which object is selected. The network may take an object (for example represented by its 3D bounding box) and the outputs from the interior sensing module as input and may output the likelihood of this object being selected by the input selection data. The system may be trained on annotated training examples.

According to various embodiments, a neural network may take a 2D or 3D occupancy grid of a fixed size as input and may output a likelihood for each cell to contain a selected object. Information from neighboring cells may be combined in a post-processing step such as non-maximum suppression.

Using a data driven approach according to various embodiments may provide that even if the geometrical intersection of the selection vector with an object does not reflect the user's intention, the user's intention may be determined. People are weak at precisely aiming at objects and have a tendency of pointing only to the proximity, in particular regarding the pointing direction of fingers, if the viewing direction and pointing direction are very different. In that case, people believe they point at an object, but in reality the line (or selection vector) would not intersect the object. A purely geometrical approach may fail in that case or may require the modeling of uncertainties as described above. A data driven approach according to various embodiments may learn such deviation from sample data. This may be of particular relevance for the movement selection feature, as directional information from movements may be even less accurate than for pointing with a finger.

In one implementation, the trained data may be linked to a user profile and may be customized for the specific user, so that the system may behave differently for different users and apply different corrections to the selection vector.

If an object has been selected, the processing module performs at least one task, for example an analysis task, for the given object.

The task may be provided (or defined) for example by a voice command or a hand gesture. In another variant, the car/system may be asking the user for some input, for example to select a preferred parking spot, lane, or vehicle to follow.

In the following, examples of processing tasks will be described.

In an exemplary classification task, the (voice) command may be "What car make/model is that?" or the like. The task to be performed may be to analyze an object region in the exterior sensor data (e.g. video image) and perform classification of content, for example using an artificial neural network, for example a convolutional neural network or other variants of image based classification.

In an exemplary textual information extraction (OCR: optical character recognition) task, the (voice) command may be "Store the address/phone number on this car/van in address book", or "Call the phone number on this car/van" or the like. The task to be performed may be to analyze a selected object region for textual information, read and categorize text (for example company name, phone number, address, and/or web address).

In an exemplary object identification task, the (voice) command may be "Keep a larger distance to this vehicle/car/truck/motorbike" or the like. The task to be performed may be to analyze the appearance of the selected vehicle and extract features that allow a later identification of the same vehicle (for example after it was temporarily hidden by another vehicle).

In a further exemplary object identification task, a specific vehicle may be identified (for example with a command like "follow the car of my wife" or the like). The system may have knowledge about who the user is (which may include personalization, for example based on a user ID (identifier) from an interior sensing system), and knowledge about the car of the user's wife (for example the license plate and/or the make and/or color of the car), for example from a user profile/ database. The system may then filter out objects in the exterior field of view according to the known information.

In an exemplary object validation task, the (voice) command may be "Follow this vehicle" or "overtake this vehicle" or the like. The task to be performed may be to check whether the type and movement state of the selected object is valid for the given command (for example, it may not be possible to follow an oncoming vehicle or a pedestrian).

The use case may also be an example for an identification or classification task in the above examples, for example linked with a color (wherein the command may for example be "Follow the red car"). In this case, the task may include filtering out potential candidates based on color and using the color information received by a color camera.

The task may be processed either in the vehicle or car, i.e. on the same processing device as the other modules, or off-board, for example using a cloud-based service.

Besides vehicles, the processing tasks may also be applicable to stationary objects (for example detected by the exterior sensors, for example traffic signs, advertisements on buildings, billboards, names of stores, restaurants, hotels, and/or logos).

Following the processing (or execution or carrying out) of the task, at least one action may be performed.

One type of action may be a system output, for example graphical or acoustical, for notification on the result of the task (for example information about a car make) or confirmation that a task has been successfully completed.

Other action types may include handling of acquired data from the analysis task, for example storing of data (for example a phone number or an address), transferring of data to another device or service (for example sharing information with a contact via instant messaging, posting on social media channel, uploading to a cloud service, and/ or sending URL (uniform resource locator) to a phone), or using data to execute a specific command (for example triggering a phone call, and/or setting the navigation destination).

Actions may also include changing/adapting the behavior of the system vehicle (for example following another vehicle in ADAS (advanced driver-assistance systems)/ AD (autonomous driving) context), controlling the vehicle (for example for an automated lane change or parking maneuver).

Actions may also include saving an image of the selected object that allows the driver or other passenger to read textual information later (for example if no OCR system is in place).

In the following, exemplary use cases according to various embodiments will be described.

For example, in an object appearance-centric use case according to various embodiments, the pointing input may indicate that the driver or another passenger points at another vehicle. The exemplary (voice) command may be: "Which car make/model is that?" or the like. The action may include the system returning the car type e.g. by speech output and/ or textual/graphical visualization. For example, the use case may be user entertainment.

In another exemplary object appearance-centric use case according to various embodiments, the pointing input may indicate that the driver or passenger points at another vehicle with text on it. The exemplary (voice) command may be "Store the address/phone number on this car/van in address book", "Save the web address on this car/van in my notes", "Call the phone number on this car/van", "Navigate to the address on this car/van", "Save an image of this car/van", or the like. The action may include the system executing what was requested and giving a feedback to the driver, for example by speech output or textual/graphical visualization, like "Address/phone number successfully stored", "Unable to read address/phone number", or the like. The use case may be an improved user interface.

In an exemplary system vehicle behavior adaptation-centric use case according to various embodiments, the pointing input may indicate that the driver points at a preceding vehicle. The exemplary (voice) command may be "Follow this vehicle/car/truck/motorbike" or the like. The action to be taken may include the ADAS (advanced driver-assistance systems)/AD (autonomous driving) system switching into a mode where it follows the selected vehicle as far as possible (for example as long as the selected vehicle drives on the highway, as long as the ego vehicle can follow with safe lane changes, depending on the operating domain). The system may confirm if the command was accepted, for example by speech output and/ or textual/graphical visualization. The use cases may include following a friend to his home, following a colleague to a meeting, or following the police if requested to.

In a further exemplary system vehicle behavior adaptation-centric use case according to various embodiments, the pointing input may indicate that the driver points at a preceding vehicle. The exemplary (voice) command may be "Keep a larger distance to this vehicle/car/truck/motorbike" or the like. The action to be taken may include the ADAS/AD system keeping a larger distance to the selected vehicle. With the vehicle identification task, this may be done even after the selected vehicle was temporarily hidden by another vehicle. The use case may include allowing the driver to feel safer when a reckless driver is ahead.

In a further exemplary system vehicle behavior adaptation-centric use case according to various embodiments, the pointing input may indicate that the driver points at a preceding vehicle. The exemplary (voice) command may be "Overtake this vehicle/car/truck/motorbike" or the like. The action to be taken may include the ADAS/AD system overtaking the selected vehicle (if possible in a safe way). The system may confirm if the command was accepted, for example by speech output and/ or textual/graphical visualization. The use cases may include overtaking a smelly garbage truck, overtaking a vehicle that just drives a bit too slow to not be bothering the ego vehicle driver.

In a further exemplary system vehicle behavior adaptation-centric use case according to various embodiments, the pointing input may indicate that the driver points to a neighboring traffic lane detected by a lane recognition method. The exemplary (voice) command may be "Change to this lane" or the like. The action to be taken may include the ADAS/AD system changing to the selected lane (if possible in a safe way). The system may confirm if the command was accepted, for example by speech output and/ or textual/graphical visualization. The use case may include providing an interface for driver-triggered lane change.

In a further exemplary system vehicle behavior adaptation-centric use case according to various embodiments, the pointing input may indicate that the driver points to a pedestrian. The exemplary (voice) command may be "Let this pedestrian cross the street" or the like. The action to be taken may include the ADAS/AD system waiting until the selected pedestrian has crossed the street and then continues to drive. The use case may be providing an improved ADAS/AD user interface.

In an exemplary navigation-centric use case according to various embodiments, the pointing input may indicate that the driver points to a (highway) exit lane (for example provided on a map or detected by the lane recognition algorithm) or to a sign announcing a (highway) exit. The exemplary (voice) command may be "Take that exit" or the like. The action to be taken may include the ADAS/AD system taking the selected exit. The system may notify the driver, for example by speech output and/ or textual/graphical visualization if the command was accepted. The use case may be providing a simplified navigation without need for driver take-over.

In a further exemplary navigation-centric use case according to various embodiments, the pointing input may indicate that the driver points to a free parking spot detected by the exterior sensors. The exemplary (voice) command may be "Use this parking spot" or the like. The action to be taken may be the ADAS/AD/parking system navigating the system vehicle into the selected parking spot. The use case may be a simplified user interface for parking assistant.

In a further exemplary navigation-centric use case according to various embodiments, the pointing input may indicate that the driver points to a free parking spot detected by the exterior sensors. The exemplary (voice) command may be "Is this parking spot large enough?" or the like. The action to be taken may include the system returning whether the selected parking spot is large enough for the system vehicle, for example by speech output and/ or textual/graphical visualization. The use case may be support in searching for a parking spot.

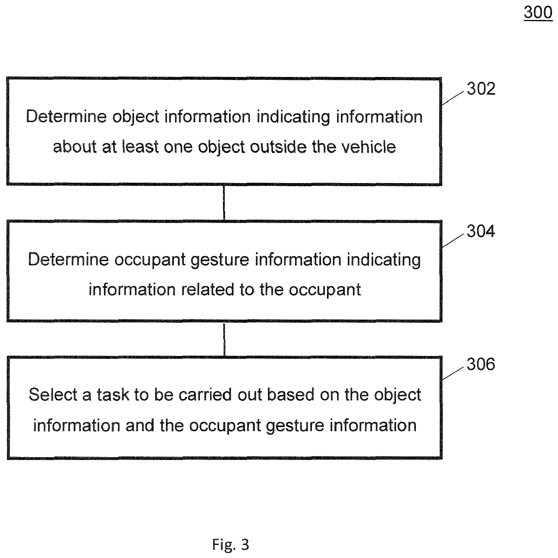

Fig. 3 shows a flow diagram 300 illustrating a method for determining a command of an occupant of a vehicle according to various embodiments. At 302, object information indicating information about at least one object outside the vehicle may be determined (for example without the use of a map of objects). At 304, occupant gesture information indicating information related to the occupant may be determined. At 306, a task to be carried out may be selected based on the object information and the occupant gesture information.

According to various embodiments, the object information may be determined based on at least one external sensor or based on information communicated from another vehicle.

According to various embodiments, the external sensor may include at least one of a radar sensor, a camera, a lidar sensor, or an ultrasonic sensor or the like.

According to various embodiments, the occupant gesture information may be determined based on at least one internal sensor.

According to various embodiments, the internal sensor may include at least one of a vision system, an infrared vision system, a near infrared vision system, a red-green-blue vision system, a red-green-blue infrared vision system, a time of flight camera, a CCCR vision system (Bayer pattern with three clear pixels and a red pixel) or any other Bayer pattern, or any other kind of vision sensors or even other sensors than vision sensors (for example a radar sensor).

According to various embodiments, the occupant gesture information may include at least one of a pointing direction of a finger of the occupant, information indicating whether the occupant's hand follows a pre-determined trajectory, or a viewing direction of the occupant.

According to various embodiments, the method may further include acquiring a voice command from the occupant, wherein the task to be carried out may be selected further based on the voice command.

According to various embodiments, the method may further include determining a plurality of candidate objects for which a task is to be carried out based on the objection information and the occupant gesture information.

According to various embodiments, the plurality of candidate objects may be determined based on respective locations of the at least one object and a direction determined based on the occupant gesture information.

According to various embodiments, the method may further include determining a context of the voice command is determined, wherein the task to be carried out is selected based on the plurality of candidate objects and the context.

According to various embodiments, the task may include at least one of a classification task, an identification task, or a validation task.

According to various embodiments, the method may further include carrying out the task to obtain a processing result, and carrying out an action based on the processing result.

Each of the steps 302, 304, 306 and the further steps described above may be performed by computer hardware components.

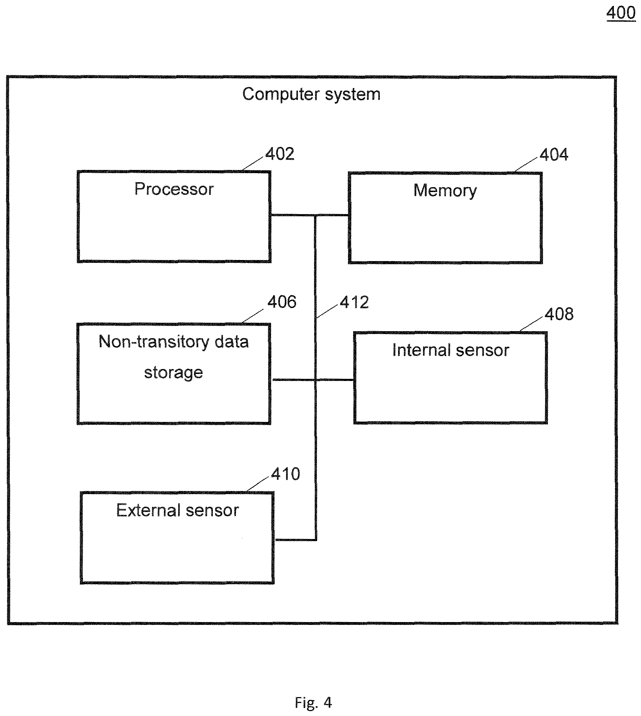

Fig. 4 shows a computer system 400 with a plurality of computer hardware components configured to carry out steps of a computer implemented method for determining a command of an occupant of a vehicle according to various embodiments. The computer system 400 may include a processor 402, a memory 404, and a non-transitory data storage 406. At least one internal sensor 408 and at least one external sensor 410 may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The at least one internal sensor 408 may be used for determining the occupant gesture information as described above. The at least one external sensor 410 may be used to determine the object information as described above.

The processor 402, the memory 404, and the non-transitory data storage 406 may be coupled with each other, e.g. via an electrical connection 412, such as e.g. a cable or a computer bus or via any other suitable electrical connection to exchange electrical signals. The at least one internal sensor 408 and/or the at least one external sensor 410 may be coupled to the computer system 400, for example via an external interface, or may be provided as parts of the computer system (in other words: internal to the computer system, for example coupled via the electrical connection 412).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

### Reference numeral list

- 100: system according to various embodiments
- 102: exterior sensing module
- 104: sensor
- 106: sensor
- 108: dynamic points of interest
- 110: interior sensing module
- 112: sensor
- 114: sensor
- 116: pointing direction
- 118: viewing direction
- 120: exterior/interior sensor fusion module
- 122: selected POI candidates
- 124: voice recognition module
- 126: voice command
- 128: context
- 130: processing task
- 132: processing result
- 134: action

- 200: illustration of a pointing scenario according to various embodiments
- 202: occupant's hand
- 204: vector
- 206: car

- 300: flow diagram illustrating a method for determining a command of an occupant of a vehicle according to various embodiments
- 302: step of determining object information indicating information about at least one object outside the vehicle
- 304: step of determining occupant gesture information indicating information related to the occupant
- 306: step of selecting a task to be carried out based on the object information and the occupant gesture information

- 400: computer system according to various embodiments
- 402: processor
- 404: memory
- 406: non-transitory data storage
- 408: internal sensor
- 410: external sensor
- 412: connection

## Claims

1. Computer implemented method for determining a command of an occupant of a vehicle,
the method comprising the following steps carried out by computer hardware components:
- determining (302) object information indicating information about at least one object outside the vehicle;
- determining (304) occupant gesture information indicating information related to the occupant; and
- selecting (306) a task to be carried out based on the object information and the occupant gesture information.

2. The implemented method of claim 1,
wherein the object information is determined based on at least one external sensor or based on information communicated from another vehicle.

3. The implemented method of claim 2,
wherein the external sensor comprises at least one of a radar sensor, a camera, a lidar sensor, or an ultrasonic sensor.

4. The implemented method of at least one of claims 1 to 3,
wherein the occupant gesture information is determined based on at least one internal sensor.

5. The implemented method of claim 4,
wherein the internal sensor comprises at least one of a vision system, an infrared vision system, a near infrared vision system, a red-green-blue vision system, a red-green-blue infrared vision system, or a time of flight camera.

6. The implemented method of at least one of claims 1 to 5,
wherein the occupant gesture information comprises at least one of a pointing direction of a finger of the occupant, information indicating whether the occupant's hand follows a pre-determined trajectory, or a viewing direction of the occupant.

7. The computer implemented method of at least one of claims 1 to 6, further comprising the following step carried out by the computer hardware components:
acquiring a voice command from the occupant;
wherein the task to be carried out is selected further based on the voice command.

8. The computer implemented method of at least one of claims 1 to 7, further comprising the following step carried out by the computer hardware components:
determining a plurality of candidate objects for which a task is to be carried out based on the objection information and the occupant gesture information.

9. The implemented method of claim 8,
wherein the plurality of candidate objects is determined based on respective locations of the at least one object and a direction determined based on the occupant passenger gesture information.

10. The computer implemented method of at least one of claims 8 or 9, further comprising the following step carried out by the computer hardware components:
determining a context of the voice command;
wherein the task to be carried out is selected based on the plurality of candidate objects and the context.

11. The implemented method of at least one of claims 1 to 10,
wherein the task comprises at least one of a classification task, an identification task, or a validation task.

12. The computer implemented method of at least one of claims 1 to 11, further comprising the following steps carried out by the computer hardware components:
carrying out the task to obtain a processing result; and
carrying out an action based on the processing result.

13. Computer system, the computer system comprising a plurality of computer hardware components configured to carry out steps of the computer implemented method of at least one of claims 1 to 12.

14. Vehicle comprising the computer system of claim 13.

15. Non-transitory computer readable medium comprising instructions for carrying out the computer implemented method of at least one of claims 1 to 12.
